# EUROPÄISCHE PATENTSCHRIFT

(11) **EP 0 384 975 B1**
(45) Veröffentlichungstag und Bekanntmachung des Hinweises auf die Patenterteilung: **25.08.1993**
(21) Anmeldenummer: 89123268.8
(22) Anmeldetag: 15.12.1989
(51) Int. Cl.: H01M 4/42, H01M 6/06

(54) **Galvanisches Primärelement**
Galvanic primary element
Elément primaire galvanique

(30) Priorität: 30.01.1989 DE 3902650
(43) Veröffentlichungstag der Anmeldung: 05.09.1990
(73) Patentinhaber: VARTA Batterie Aktiengesellschaft, D-30405 Hannover (DE)
(72) Erfinder: Jose, Horst-Udo, Dipl.-Ing. (FH), D-7090 Ellwangen (DE); Jung, Gerd, Dipl.-Chem., D-7090 Ellwangen (DE)
(74) Vertreter: Kaiser, Dieter Ralf, Dipl.-Ing.

(56) Entgegenhaltungen:
- DE-B- 1 086 309
- CHEMICAL ABSTRACTS, Band 53, Nr. 13, 10. Juli 1959, Zusammenfassung Nr. 12068i, Columbus, Ohio, US; && JP-A-58 3204 (MATSUSHITA ELECTRIC CORP.) 26-04-1958
- PATENT ABSTRACTS OF JAPAN, Band 6, Nr. 21 (E-93)[899], 6. Februar 1982; & JP-A-56 143 662 (TAMAGAWA KIKAI KINZOKU K.K.) 09-11-1981
- PATENT ABSTRACTS OF JAPAN, Band 11, Nr. 65 (E-484)[2512], 27. Februar 1987; & JP-A-61 224 265 (FUJI ELELCTROCHEM. CO. LTD) 04-10-1986
- PATENT ABSTRACTS OF JAPAN, Band 11, Nr. 209 (E-521)[2656], 7. July 1987; & JP-A-62 31 941 (TOSHIBA BATTERY CO. LTD) 10-02-1987
- PATENT ABSTRACTS OF JAPAN, Band 10, Nr. 263 (E-435)[2319], 9. September 1986; & JP-A-61 88 451 (MITSUI MINING & SMELTING CO. LTD) 06-05-1986
- PATENT ABSTRACTS OF JAPAN, Band 11, Nr. 130 (E-502)[2577], 23. April 1987; & JP-A-61 273 861 (HITACHI LTD) 04-12-1986
- PATENT ABSTRACTS OF JAPAN, Band 12, Nr. 207 (E-621)[3054], 14. Juni 1988; & JP-A-63 6749 (MATSUSHITA ELECTRIC IND. CO. LTD) 12-01-1988

## Beschreibung

Die Erfindung betrifft ein galvanisches Primärelement sauren Typs mit einer Zinkanode, die Metallzusätze enthält, welche die Zinkkorrosion unterdrücken und die mechanische Formfestigkeit verbessern, einer depolarisierenden Kathode und einem Gelelektrolyten.

Die Anwendung der Erfindung erstreckt sich im wesentlichen auf saure Zink/Braunsteinzellen (Leclanché) und Zink/Sauerstoffelemente.

In solchen Zellen ist die Zinkelektrode gewöhnlich als Becher oder Hohlzylinder ausgebildet, welcher alle übrigen aktiven Zellbestandteile (um einen Kohlestabableiter gepreßtes Braunstein/ Rußgemisch als Kathode, Elektrolytpaste mit Separator als Träger) in sich aufnimmt, seltener als flaches Blech in einer geschichteten Zellenstruktur.

Nach R. Huber, "Trockenbatterien", Seite 29 (VARTA Fachbuchreihe, Band 2, 1972) ist das Anodenblech in Abhängigkeit von seiner Herstellungsweise mit unterschiedlichen Mengen an Blei und Cadmium legiert, wobei der Bleigehalt bis zu 0,6% betragen kann. Das zulegierte Blei erhöht die Duktilität beim Walz und Fließpreßvorgang und zeigt zusätzlich eine leicht inhibierende Wirkung auf die Zinkkorrosion. Der Zusatz von Cadmium verbessert die mechanische Festigkeit der Zinkformteile während des Batterieherstellprozesses.

Als typische Lösungselektrode wird das Zinkmetall in der Batterie bei der Stromentnahme mit zunehmender Gebrauchsdauer aufgelöst.

Neben dieser "nutzbringenden" Auflösung findet aber, und zwar bereits bei längerer Lagerdauer und verstärkt durch erhöhte Temperatur, eine geringfügige Selbstauflösung des Zinks statt. Diese hat ihre Ursachen darin, daß zwar der Austausch des Säurewasserstoffs gegen Zink kinetisch gehemmt ist, die Wasserstoffabscheidung jedoch bei einem zu niedrigen Potential erfolgt, als daß der Auflösung Einhalt geboten werden kann. Die allmähliche Ansammlung von Wasserstoff im Zellinnern führt zu einem Druckanstieg, der im ungüstigen Fall Deformationen oder sogar Elektrolytaustritt zur Folge hat.

Werden Wasserstoffentwicklung und Auflösen der Zinkanode im unbelasteten Zustand nicht unterdrückt, tritt darüber hinaus eine unerwünschte Kapazitätsabschwächung ein.

Das bisher bewährte Mittel, um die Zinkkorrosion und Wasserstoffentwicklung durch Anheben der Wasserstoffabscheidungsspannung zu unterdrücken, ist der Zusatz von Quecksilber zum Zink. Damit aber erhöht sich die Zahl der im Zink enthaltenen Elemente, die als toxisch und umweltbelastend einzustufen sind, zusammen mit dem schon genannten Blei und Cadmium auf drei.

Es hat daher nicht an Vorschlägen gefehlt, die auf eine Substitution wenigstens der besonders giftigen Metalle Hg und Cd abzielten. So beschreibt die DE-B 1086309 eine Lösungselektrode aus Feinzink mit Zusatz von Indiummetall oder die DE-A 3229703 die Verwendung von Indium und Gallium als dem Zink zulegierte Metalle.

In der JP-A 60-170751 (Toshiba Denchi K.K.) wird der Zusatz von Pb und Li zum Zink genannt, während die JP-A 60-32249 Touhou Aen. K.K.) eine Zinklegierung mit mindestens 0,01% Ag und weiteren Metallen empfiehlt.

Die DE-A 3605718 offenbart ein Primärelement der eingangs formulierten Gattung, welches eine Zinkanode aus Feinzink mit einem Legierungszusatz von bis zu 0,6% Pb enthält.

Die JP-A 58-3204 schließlich stellt insgesamt 14 Elemente, darunter Blei, als Legierungszusätze zur Wahl, ohne daß jedoch bestimmte Elemente oder Kombinationen derselben mit anderen als bevorzugt genennt, geschweige sinnvolle Konzentrationen angegeben werden.

Angesichts einer hier nur unvollständig erfaßten Vielzahl bekannter Legierungszusammensetzungen von Zinkelektroden liegt der Erfindung die Aufgabe zugrunde, das oben genannte Primärelement unter Zuhilfenahme nichttoxischer Zusätze insbesondere zur Zinkelektrode so zu vervollkommen, daß es einem herkömmlichen sauren Primärelement, dessen gute elektrische Funktion und Elektrodenqualität mit toxischen Mitteln erkauft werden muß, ebenbürtig ist.

Die Aufgabe wird erfindungsgemäß mit einem Primärelement gelöst, wie es im Patentanspruch 1 angegeben ist.

Danach hat sich gezeigt, daß einesteils der inhibierende Effekt des Quecksilbers auch erzielt werden kann, wenn man an dessen Stelle einzeln oder in Kombination die Metalle Indium und Wismut dem Zink zugefügt oder deren Salze der Elektrolytlösung zugibt, und wenn man anderenteils das Cadmium, dem die Zinkelektrode ihre mechanische Stabilität verdankt, noch gegen Magnesium und/oder Lithium austauscht. Bei den Dotierungsmetallen kann es sich daher sowohl um Abscheidungen auf der Zinkoberfläche als auch, und zwar bevorzugt, um Legierungsbestandteile handeln. Die negative Elektrode des erfindungsgemäßen Primärelements besteht also in ihrer allgemeinen Ausführung aus Feinzink mit Zusätzen von mindestens einem der Metalle In und Bi sowie mindestens einem Metalle Mg und Li.

Als vorteilhaft hat sich allerdings erwiesen, wenn das Zinkblech noch zusätzlich Pb enthält, dessen Menge im Rahmen der von Huber angegebenen Bereichszahlen für einige Becherlegierungen liegt. Erfindungsgemäß soll das Anodenzink 0,01 bis 0,6% Pb, vorzugsweise 0,02 bis 0,1% Pb enthalten.

Unabhängig von der fakultativen Pb-Zugabe sollen die im Zink enthaltenen übrigen Metallgehalte erfindungsgemäß jeweils in den folgenden Grenzen liegen:
0,003 bis 0,03% In;
0,001 bis 0,01% Bi;
0,0001 bis 0,002 Mg;
0,001 bis 0,01% Li
Zum Nachweis der Wirksamkeit der erfindungsgemäßen Legierungszusätze wurden Versuchszellen (A,B,C,D,E) hergestellt und mit herkömmlichen bzw. fertigungsüblichen Vergleichszellen (F,G) verschiedenen Tests unterworfen. Bei den Versuchszellen lagen entsprechend den erfindungsgemäß gegebenen Kombinationsmöglichkeiten folgende Anodenlegierungen vor:
A) Zn + 0,01% In + 0,0005% Mg
B) Zn + 0,005% In + 0,001% Bi + 0,0003% Mg
C) Zn + 0,025% Pb + 0,01% In + 0,0003% Mg
D) Zn + 0,1% Pb + 0,01% In + 0,005% Li
E) Zn + 0,005% Bi + 0,1% Pb + 0,003% Li
Die Vergleichzellen besaßen ein Anodenzink aus
F) Zn + 0,25% Pb + 0,06% Cd
G) Zn + 0,6% Pb
Die Kathodenmaterialien, bestehend aus Elektrolytbraunstein, Acetylenruß, Zinkoxid und Zinkchloridlösung, waren in allen Zellen die gleichen.

Die Separation zwischen Anode und Kathode erfolgte durch einen herkömmlichen, mit Gel beschichteten Papierseparator.

Das günstige Ergebnis der Versuche kommt in vier Figurendarstellungen zu Ausdruck.

Figur 1 zeigt die Widerstandsfähigkeit zylindrischer Anodenteile aus erfindungsgemäßen Zinklegierungen bei mechanischer Deformation.

Figuren 2, 3 und 4 zeigen Kapazitätswerte von Primärelementen mit erfindungsgemäßen Zinkanoden unter verschiedenen Entladebedingungen.

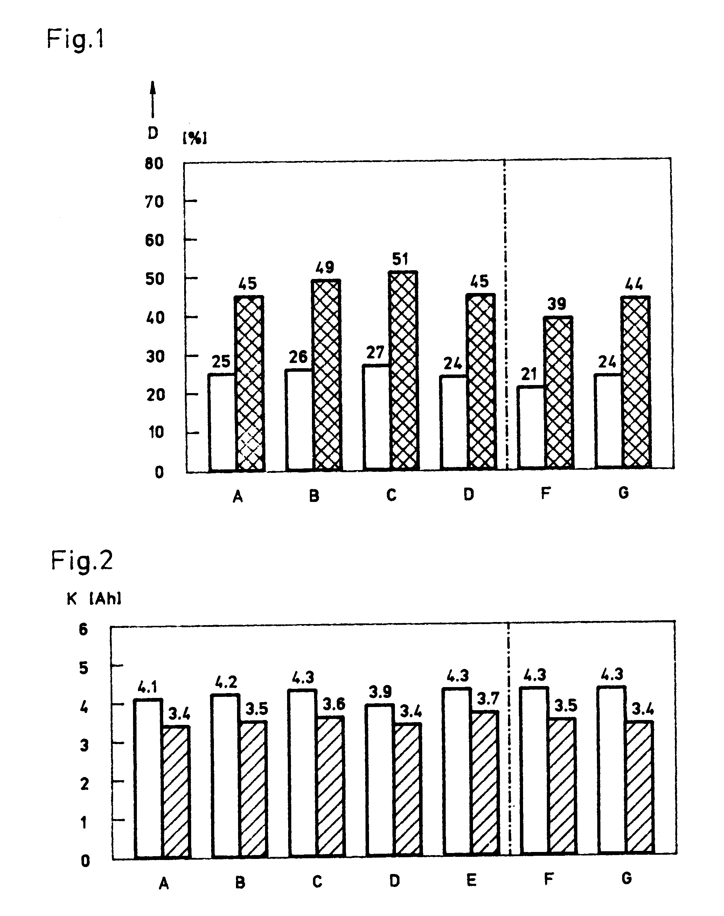

Im einzelnen veranschaulicht das Balkendiagramm gemäß Figur 1 die Durchmesserverringerung, die ein Anoden-Ringzylinder Für ein Primärelement mit der IEC-Bezeichnung R 20 (h = 61,5 mm, ⌀ = 34,2 mm) unter der mechanischen Energieeinwirkung 0,5 Joule (weiße Balken) bzw. 1,0 Joule (gestrichelte Balken) erleidet. Die Bezeichnungen A bis D und F, G stehen für die weiter vorn definierten Zinklegierungen. Die auf der Ordinate des Diagramms aufgetragenen Zahlen 0 bis 80 geben den Deformationsgrad D in % wieder.

Aus den Balkenlängen ist ersichtlich, daß die erfindungsgemäßen schadstoffarmen Legierungen A bis D in ihrer mechanischen Festigkeit den konventionellen Legierungen F und G nur ganz unerheblich nachstehen.

In den Balkendiagrammen 2 bis 4 beziehen sich die Bezeichnungen A bis G auf Versuchszellen, die lediglich durch die angegebenen Legierungszusammensetzungen ihrer Zinkanoden unterschieden sind.

Dargestellt sind die entnommenen Kapazitäten K in Ah in Abhängigkeit vom Entladeverfahren, nämlich
in Figur 2 bei kontinuierlicher 5,1 Ohm-Entladung bis zu einer Endspannung von 1,0 Volt,

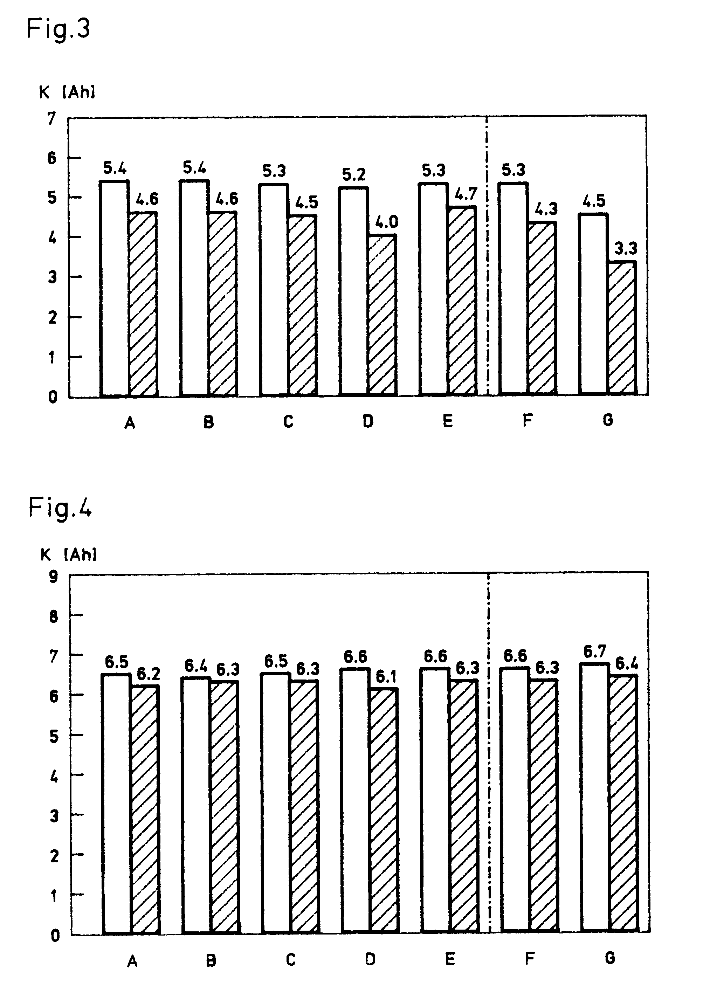

in Figur 3 bei einer Entladung nach LIFT (Light Industrial Flashlight-Test, d.h. 4 Minuten pro Stunde, 8 Stunden pro Tag) über 2,2 Ohm bis zu einer Endspannung von 1,0 Volt und
in Figur 4 bei einer intermittierenden Entladung von 4 h pro Tag über 20 Ohm bis zu einer Endspannung von 0,9 Volt.

Dabei gelten alle weißen Balken für frisch hergestellte Zellen und alle schraffierten Balken für Zellen, die vor dem Entladeversuch 3 Monate bei 45°C gelagert waren.

Im ganzen zeigen die elektrischen Tests, daß die erfindungsgemäßen schadstoffarmen Primärelemente A bis E den Vergleichszellen F und G mit fertigungsüblichen Zinkanoden hinsichtlich ihrer Kapazitäten zumindest ebenbürtig sind. Es ist demzufolge möglich, nicht nur Quecksilber, sondern über bereits bekannte Hg-freie Zinklegierungen hinausgehend auch das stark toxische Cadmium als Legierungsmetall zu vermeiden, da erfindungsgemäß die korrosionsschützende Rolle des Quecksilbers von Indium und/oder Wismut und die elementspezifischen Eigenschaften von Cadmium sowie Blei, die mehr für das mechanische Verhalten des Zinks beim Verarbeitungsprozeß verantwortlich sind, von Magnesium und/oder Lithium vertreten werden können. Ein verbleibender geringer Rest an Blei im Feinzink außer den genannten Ersatzmetallen kann dabei vorteilhaft sein.

Die hier wiedergegebenen Versuchsbefunde konnten im Prinzip mit weiteren Zellen, die anstelle des ZnCl₂-Elektrolyten einen NH₄Cl-Elektrolyten enthielten und deren Kathode anstelle von Elektrolytbraunstein aus Naturbraunstein bestand, bestätigt werden, so daß das im Hinblick auf die Zinklegierungen Gesagte allgemein für alle sauren Primärelemente, ob Zinkchlorid- oder Salmiakzelle, gilt.

Durch die Erfindung wird somit ein dem bisherigen Qualitätsstandard hinsichtlich elektrischer Leistung und Lagerfähigkeit vergleichbares, aber durch Fehlen giftiger Inhaltsvolle "umweltfreundliches" Anodenzink zur Verfügung gestellt.

## Patentansprüche

1. Galvanisches Primärelement sauren Typs mit einer Zinkanode, die Metallzusätze enthält, welche die Zinkkorrosion unterdrücken und die mechanische Formfestigkeit verbessern, einer depolarisierenden Kathode und einem Gelelektrolyten, dadurch gekennzeichnet, daß die Anode aus Feinzink besteht, dem anstelle von Quecksilber mindestens eines der Metalle Indium und Wismut sowie anstelle von Cadmium mindestens eines der Metalle Magnesium und Lithium zugefügt ist, wobei die jeweils zugesetzten Mengen
an Indium 0,003 bis 0,03%
an Wismut 0,001 bis 0,01%
an Magnesium 0,0001 bis 0,002% und
an Lithium 0,001 bis 0,01%
betragen.

2. Primärelement nach Anspruch 1, dadurch gekennzeichnet, daß dem Feinzink zusätzlich Blei zulegiert ist.

3. Primärelement nach Anspruch 1 oder 2, dadurch gekennzeichnet, daß die dem Feinzink zusätzlich zulegierte Meng e an Blei 0,01 bis 0,6%, vorzugsweise 0,02 bis 0,1% beträgt.

## Claims

1. Galvanic primary cell of acid type, having a zinc anode containing metal additives which suppress zinc corrosion and improve mechanical dimensional stability, having a depolarizing cathode and a gel electrolyte, characterized in that the anode is made of high-grade zinc to which, instead of mercury, at least one of the metals indium and bismuth and, instead of cadmium, at least one of the metals magnesium and lithium is added, the quantities added respectively being:
0.003 to 0.03 % of indium
0.001 to 0.01 % of bismuth
0.0001 to 0.002 % of magnesium and
0.001 to 0.01 % of lithium.

2. Primary cell according to Claim 1, characterized in that lead is additionally added to the high-grade zinc as an alloy.

3. Primary cell according to Claim 1 or 2, characterized in that the quantity of lead additionally added to the high-grade Zinc as an alloy is 0.01 to 0.6 %, preferably 0.02 to 0.1 %.

## Revendications

1. Elément primaire galvanique du type acide avec une anode de zinc, qui renferme des additions métalliques qui répriment la corrosion du zinc, et qui améliorent la résistance au moulage, une cathode dépolarisante et un électrolyte en gel, caractérisé en ce que l'anode consiste en du zinc raffiné, en ce qu'on ajoute, au lieu du mercure, au moins un des métaux indium et bismuth ainsi qu'à la place du cadmium, au moins un des métaux magnésium et lithium, pour lequel les quantités ajoutées respectivement s'élèvent
en indium de 0,003 à 0,03 %
en bismuth de 0,001 à 0,01 %
en magnésium de 0,0001 à 0,002 %
et en lithium de 0,001 à 0,01 %

2. Elément primaire selon la revendication 1, caractérisé en ce que du plomb est allié en supplément au zinc raffiné.

3. Elément primaire selon la revendication 1 ou 2, caractérisé en ce que la quantité de plomb alliée en supplément au zinc raffiné s'élève à 0,01 à 0,6 %, de préférence de 0,02 à 0,1 % .
